# EUROPÄISCHE PATENTSCHRIFT

(11) **EP 1 785 642 B1**
(45) Veröffentlichungstag und Bekanntmachung des Hinweises auf die Patenterteilung: **02.07.2014**
(21) Anmeldenummer: 07004257.7
(22) Anmeldetag: 16.07.2004
(51) Int. Cl.: F16F 15/00

(54) **Modulare Schnittstelle zum Dämpfen mechanischer Schwingungen**
Modular connection for damping mechanical vibrations
Liaison modulaire pour l'amortissement de vibrations mécaniques

(30) Priorität: 22.07.2003 DE 10333492; 23.12.2003 DE 10361481
(43) Veröffentlichungstag der Anmeldung: 16.05.2007
(62) Teilanmeldung aus: 04741106.1
(73) Patentinhaber: Fraunhofer-Gesellschaft zur Förderung der angewandten Forschung e.V., 80686 München (DE)
(72) Erfinder: Melz, Tobias, 64285 Darmstad (DE); Matthias, Michael, 64285 Darmstad (DE); Hanselka, Holger, 64297 Darmstadt (DE); Herold, Sven, 64297 Darmstadt (DE)
(74) Vertreter: Dennemeyer & Associates S.A.

(56) Entgegenhaltungen:
- EP-A- 0 545 264
- EP-A- 0 957 288
- DE-A- 4 142 885
- GB-A- 2 222 657
- PATENT ABSTRACTS OF JAPAN Bd. 0111, Nr. 57 (M-590), 21. Mai 1987 (1987-05-21) & JP 61 286634 A (MEIRITSU SEIKI KK), 17. Dezember 1986 (1986-12-17)
- PATENT ABSTRACTS OF JAPAN Bd. 0113, Nr. 88 (M-652), 18. Dezember 1987 (1987-12-18) & JP 62 155347 A (MITSUI ENG & SHIPBUILD CO LTD), 10. Juli 1987 (1987-07-10)

## Beschreibung

Die Erfindung betrifft eine Schnittstelle zum Dämpfen oder Isolieren mechanischer Schwingungen mittels mehrerer Energiewandler-Systeme. Derartige Schnittstellen dienen beispielsweise zum Dämpfen von Schwingungen im Bereich des allgemeinen Maschinenbaus, der Automobiltechnik, des Bauingenieurwesens oder der Luft- und Raumfahrttechnik.

In Maschinen, Fahrzeugen und ähnlichen Baugruppen entstehen, z. B. durch den Betrieb von Aggregaten (beispielsweise Aggregaten zur Stromerzeugung) oder durch sonstige Umgebungsbedingungen erregte, dynamische mechanische Störungen in Form von Schwingungen. Die Frequenzen dieser Schwingungen reichen bis in den höherfrequenten akustischen Bereich und bewirken lokal am Ort der Störentstehung bzw- der Störeinleitung oder, nach Übertragung über mechanische Lastpfade, weiter entfernt unerwünschte dynamische und/oder akustische Effekte. In der Folge ergeben sich Komforteinbußen, Sicherheitsprobleme, Bauteilschädigungen infolge von struktureller Ermüdung, verminderte Lebensdauer, reduzierte Funktionalitäten, etc.

### Stand der Technik

Zur Dämpfung oder Isolierung mechanischer Schwingungen wird häufig die sogenannte Materialdämpfung eingesetzt, bei der die mechanische Energie der Schwingung unmittelbar in thermische Energie umgesetzt wird. Beispiele hierfür sind elastische oder viskoelastische Dämpfungssysteme.

Daneben werden zunehmend Maßnahmen eingesetzt, die auf weiteren Energiewandler-Systemen beruhen. Diese Energiewandler-Systeme wandeln i. d. R. mechanische in elektrische Energie um und umgekehrt. Beide Effekte werden für die Dämpfung mechanischer Schwingungen eingesetzt. Man unterscheidet dabei in der Regel zwischen aktiven, semi-aktiven und passiven Schwingungsdämpfern.

Bei der passiven und semi-aktiven Schwingungsdämpfung wird die mechanische Energie der Schwingungen mit Hilfe eines elektrisch-mechanischen Energiewandlers (z- B- einer Piezokeramik) zunächst in elektrische Energie umgewandelt. Diese elektrische Energie wird dann im Fall der passiven Schwingungsdämpfung in einer passiven elektrischen Schaltung (z. B. einem ohmschen Widerstand) dissipiert, d. h. in thermische Energie umgewandelt, bzw. im Fall der semi-aktiven Schwingungsdämpfung mit Hilfe einer aktiven elektrischen Schaltung umgeleitet (z. B. elektrischer Tilger). Derartige Systeme werden beispielsweise in N.W. Hagood and A. von Flotow: Damping of Structural Vibrations with Piezoelectric Materials and Passive Electrical Networks, Journal of Sound and Vibration 146 (2), 243 (1991), beschrieben.

Bei der aktiven Schwingungsisolierung wird zwischen eine Störquelle (Basisseite) und eine Anschlussseite mindestens ein Aktuator-System geschaltet. Als "Aktuator" wird in diesem Zusammenhang ein Energiewandler bezeichnet, welcher z. B. elektrische Signale in mechanische Bewegungen umwandeln kann, beispielsweise ein Piezo-Aktuator oder ein pneumatischer Aktuator. Entscheidend ist, dass die Chrakteristik (z. B. Ausdehnung) der Aktuatoren durch ein Ansteuersignal kontrolliert veränderbar ist. Ein Beispiel für ein System zur aktiven Schwingungsisolierung mit Hilfe von Aktuator-Elementen ist in der US 5,660,255 offenbart. Zwischen ein Basisgehäuse und eine zu isolierende Nutzlast werden Aktuator-Elemente, sowie eine kleine zusätzliche Masse eingebracht. Auf der kleinen Masse sind Sensoren angebracht, welche die Verschiebung der kleinen Masse registrieren. Aus der Verschiebung wird mit Hilfe einer elektronischen Regelung und einer externen elektrischen Energiequelle ein Stellsignal für die Aktuator-Elemente generiert. Die Aktuator-Elemente werden so angesteuert, dass die Schwingungsbewegung am Ort der Nutzlast weitgehend eliminiert wird.

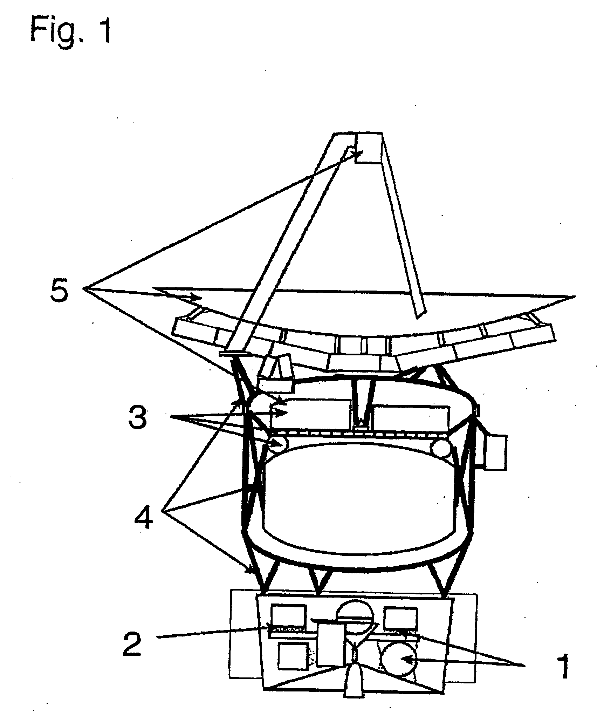

Fig. 1 zeigt einen Satelliten als Beispiel für eine aktive Entkopplung von Störquellen und sensiblen Komponenten, die mechanisch nicht gestört werden sollten. Der Satellit enthält interne Störquellen 1, etwa mechanische Kühler, Motoren, etc. Die mechanischen Störungen dieser Störquellen 1 werden durch aktive Elemente 2, 3, 4 gedämpft, so dass sich die Störungen nicht von den Störquellen 1 über Übertragungswege 3, 4 auf die empfindlichen Komponenten 5 (Kameras, Reflektoren, etc.) auswirken.

Neben der Nutzung zur aktiven, passiven und semi-aktiven Schwingungsdämpfung können die elektrisch-mechanischen Energiewandler oft auch gleichzeitig als Stellglieder zur mechanischen Positionierung einer Nutzlast genutzt werden. Dies kann beispielsweise dadurch erfolgen, dass eine ringförmige Anordnung einer Mehrzahl von Aktuatoren in eine schwingungsreduzierende Schnittstelle integriert wird, welche z. B. eine gezielte Verkippung einer Struktur gegenüber einer Basis bewirken kann. Ein derartiges System wird beispielsweise in DE 195 27 514 C2 offenbart.

Aus konstruktiven Gründen werden Aktuator-Systeme in der Praxis häufig mit einer Vorlast betrieben. Häufig handelt es sich dabei um eine mechanische Vorlast in Form einer Druck- oder Zugbelastung auf das Aktuator-System. Bei Piezo-Aktuatoren beispielsweise, bei denen eine Ausdehnung über die Ruhelänge (d- h. Länge des Aktuators ohne beaufschlagte Spannung) hinaus zu mechanischen Beschädigungen des Aktuators führen würde, ist ein Betrieb ohne Vorspannung praktisch nicht sinnvoll bzw. nicht möglich. Die konstruktive Realisierung einer Vorrichtung zum-Ausüben einer Vorspannung stellt jedoch insbesondere bei dem bzw. den Aktuatoren ein Problem dar, deren Ausdehnungsrichtung sich parallel zu der von der Nutzlast ausgeübten Kraft (beispielsweise der Gewichtskraft) erstreckt und somit eine häufig negative Auswirkung auf die aktuatorische Wirksamkeit hat. In US 5,660,255 ist keine befriedigende Lösung dieses Problems offenbart.

In DE 195 27 514 C2 wird eine Schnittstelle zur schwingungsreduktion in strukturdynamischen Systemen offenbart, bei der eine Schwingungsisolation zwischen einem strukturseitigen Bauteil und einem basisseitigen Bauteil durch eine Mehrzahl von eine Hauptrichtung aufweisenden Aktuatoren erfolgt. Eine Druckvorspannung auf die Aktuatoren wird durch Dehnschrauben zwischen dem basisseitigen Bauteil und dem strukturseitigen Bauteil gewährleistet. Eine derartige starre mechanische Verbindung zwischen dem basisseitigen Bauteil und dem strukturseitigen Bauteil hat jedoch den Nachteil, dass dadurch eine Brücke geschaffen wird, über die sich Schwingungen von einer basisseitigen Störquelle zum strukturseitigen Bauteil ausbreiten können.

Die Druckschrift GB 2 222 657 A offenbart zwei verschiedenartige Schnittstellen zur Schwingungsreduktion. Eine erste Schnittstelle umfasst ein Gehäuse und ein stempelförmiges Bauteil. Um zwischen dem Gehäuse und dem stempelförmigen Bauteil auftretende Schwingungen zu isolieren, sind im Inneren des Gehäuses Aktuatoren angeordnet. Diese bilden jeweils einen Lastpfad zwischen dem Gehäuse und dem stempelförmigen Bauteil aus.

Die Kontaktstellen zwischen den Aktuatoren und dem Gehäuse sowie zwischen den Aktuatoren und dem stempelförmigen Bauteil sind flächig ausgebildet. Weiterhin ist das Gehäuse einstückig ausgeführt. Dies limitiert den Verfahrweg der Schnittstelle bei rotatorischen Bewegungen. Entsprechend ist die Schnittstelle nicht geeignet, rotatorische Schwingungen mit hohen Amplituden zu dämpfen.

Eine zweite Schnittstelle der GB 2 222 657 A weist zwei Gehäusehälften auf. Um zwischen diesen Gehäusehälften auftretende Schwingungen zu absorbieren, sind Aktuatoren unterschiedlicher Vorzugsrichtungen in vier parallel zueinander ausgerichteten Aktuatorpaketen angeordnet. Die Aktuatorpakete bilden jeweils einen Lastpfad zwischen den beiden Gehäusehälften aus.

Jeweils eine der zwei Kontaktstellen zwischen einem Aktuatorpaket und den Gehäusehälften ist flächig ausgeführt. Um den Verfahrweg der Schnittstelle bei rotatorischen Bewegungen zu vergrößern, bildet eine Kugelkalotte die zweite Kontaktstelle.

Eine Vorspanneinrichtung weist die zweite Schnittstelle nicht auf. Bei größeren, sowohl translatorischen als auch rotatorischen Schwingungen besteht die Gefahr, dass sich die Gehäusehälften von den Aktuatorpaketen lösen. Dies würde zu einer Zerstörung der Aktuatoren führen. Die zweite Schnittstelle kann daher nur mit einer hohen statischen Vorlast betrieben werden.

Die Kräfte, die in horizontaler Richtung auf die Schnittstelle wirken, treten in den Aktuatorpaketen als Scherkräfte auf. Piezoaktuatoren sind allerdings nur tolerant gegenüber Druck-beanspruchungen. Bereits geringe Scherkräfte können zur Zerstörung eines Piezoaktuators führen.

In DE 41 42 885 A1 wird eine Schnittstelle zur Schwingungsreduktion mit zwei Aktuatoren offenbart. Die Aktuatoren bilden jeweils einen Lastpfad zwischen zwei Hälften der Schnittstelle aus. Eine gegenphasige Bewegung der beiden Aktuatoren führt zu einer translatorischen Relativbewegung der Schnittstellenhälften. Die Schnittstelle ist somit geeignet, eindimensionale, translatorische Schwingungen, nicht aber zweidimensionale translatorische Schwingungen und rotatorische Schwingungen zu dämpfen.

### Aufgabe

Aufgabe der vorliegenden Erfindungen ist es, eine möglichst schallübertragungsarme Schnittstelle zur Schwingungsreduktion anzugeben, welche zur aktiven, semi-aktiven und passiven Schwingungsisolierung sowie zu einer mechanischen Positionierung einer Last genutzt werden kann.

### Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet.

Es wird eine Schnittstelle zur Reduktion mechanischer Schwingungen vorgeschlagen, welche ein Basisanschlusselement, ein Lastanschlusselement und mindestens ein Abstützelement aufweist. Dabei erstreckt sich zwischen mindestens einem auf dem Basisanschlusselement liegenden Angriffspunkt und mindestens einem auf dem Lastanschlusselement liegenden Angriffspunkt mindestens ein erstes Energiewandler-System.

Das Energiewandler-System kann je nach Anwendung und Anforderungen auf verschiedenen physikalischen Prinzipien beruhen. Als besonders vorteilhaft haben sich insbesondere Piezo-Aktuatoren erwiesen. Aber auch Aktuatoren, die auf sogenannten Formgedächtnislegierungen oder anderen Materialien mit Gedächtnis-Effekt basieren, sowie magneto- oder elektrostriktive Aktuatoren, pneumatische oder hydraulische Aktuatoren, magneto- oder elektrorheologische Flussigkeits-Aktuatoren und Dämpfungselemente lassen sich vorteilhaft einsetzen. Auch Kombinationen verschiedener Energiewandler-Systeme sind möglich, beispielsweise die Kombination (z. B. eine Serien- oder Parallelschaltung) eines Piezo-Aktuators mit einem "konventionellen" Dämpfungssystem, wie beispielsweise eine Federsystem oder einem Gummidämpfer.

Federsysteme oder elastische Materialien lassen sich in Kombination mit Piezo-Aktuatoren auch einsetzen, um eine Vorlast auf den Piezo-Aktuator zu erzeugen oder eine bestehende Vorlast zu erhöhen. Auch Schwingungen in unterschiedlichen Frequenzbereichen lassen sich durch Kombination verschiedener Wirkprinzipien und Energiewandler-Systeme ausgleichen, also z. B. hochfrequente Schwingungen durch aktive oder passive Dämpfung mittels Piezo-Aktuatoren, niederfrequente Schwingungen durch konventionelle Dämpfungselemente (z. B- viskoelastische Dämpfer).

Zwischen mindestens einem auf dem Abstützelement liegenden Angriffspunkt und mindestens einem auf dem Lastanschlusselement liegenden Angriffspunkt erstreckt sich mindestens ein zweites Energiewandler-System. Für die Auswahl und die Zusammensetzung dieses zweiten Energiewandler-Systems gelten die oben angeführten Beschreibungen zum ersten Energiewandler-System sinngemäß.

Das Basisanschlusselement ist mit dem mindestens einen Abstützelement über mindestens eine Vorspanneinrichtung derart verbunden, dass durch die Vorspanneinrichtung eine Vorlast auf das erste und das zweite Energiewandler-System ausgeübt wird, wobei das Basisanschlusselement und das mindestens eine Abstützelement einander nicht berühren. Bei dieser Vorlast kann es sich beispielsweise um eine mechanische Druck- oder Zugbelastung handeln. Wahlweise ist auch ein Betrieb mit der Vorlast Null möglich, also ein Betrieb bei dem keine Kraft auf die Energiewandler-Systeme ausgeübt wird. Wahlweise kann diese Vorlast (auch die Vorlast Null) noch beispielsweise mit einer elektrischen Vorlast kombiniert werden. Die Vorspanneinrichtung ist elastisch. Die Vorlast kann direkt oder indirekt auf die Energiewandler-Systeme ausgeübt werden, also beispielsweise auch indirekt über ein zusätzliches Federsystem.

In ihren jeweiligen Angriffspunkten sind die Energiewandler-Systeme kugelartig punktförmig gelagert.

Das Lastanschlusselement soll einen in einem Zwischenraum zwischen dem Basisanschlusselement und dem Abstützelement liegenden Teil und einen außerhalb des Zwischenraums zwischen dem Basisanschlusselement und dem Abstützelement liegenden Teil aufweisen.

Unter Zwischenraum ist dabei nicht nur ein abgeschlossener Hohlraum zu verstehen, sondern jeglicher Raum zwischen Basisanschlusselement und Lastanschlusselement.

Diese Bedingung gewährleistet den Vorteil, dass das Lastanschlusselement für eine Montage einer Last leicht zugänglich ist. Die Schwingungsisolation erfolgt beispielsweise über den zwischen dem Basisanschlusselement und dem Abstützelement liegenden Teil, wodurch eine Druckvorspannung auf die Energiewandler-Systeme ausgeübt werden kann. Die Montage einer Last hingegen erfolgt an dem außerhalb des Zwischenraums zwischen dem Basisanschlusselement und dem Abstützelement liegenden Teil des Lastelements. Letzterer ist nun nicht mehr durch die räumlichen Maße des Zwischenraums beschränkt, kann also beliebig in Form und Größe ausgestaltet sein und dadurch beispielsweise spezielle Erfordernisse der Anschlussgeometrie der Last berücksichtigen.

Das Basisanschlusselement und das Lastanschlusselement können beispielsweise eine ebene Montagefläche aufweisen. Dies erleichtert den Einbau der Schnittstelle in vorhandene Strukturen zur Isolierung einer vibrationsempfindlichen Last von einer oder mehreren Störquellen. Weiterhin lassen sich auf diese Weise mehrere Schnittstellen auf einfache Weise seriell hintereinanderschalten.

Die beschriebene Schnittstelle kann
- als Lagerungselement,
- als modulares Übertragungselement und/oder
- als Stellelement
in Strukturen eingearbeitet werden.

Die vorgeschlagene Anordnung zeichnet sich insbesondere dadurch aus, dass das Lastanschlusselement i. d. R. nur über das erste und das zweite Energiewandler-System mit dem Abstützelement bzw. dem Basisanschlusselement verbunden ist. Auf diese Weise wird die Anzahl der Schallbrücken zwischen basisseitigen Störquellen und einer Nutzlast auf das technisch notwendige Minimum reduziert.

Trotz dieser Reduktion der Schallbrücken ist durch die mindestens eine elastische Vorspanneinrichtung, welche eine Verbindung zwischen Basisanschlusselement und Abstützelement herstellt, eine definierte Einstellung einer Vorspannung der Energiewandler-Systeme möglich. Dies kann beispielsweise dadurch erfolgen, dass als Vorspanneinrichtung ein elastisches Element, Dehnschrauben oder ähnliche in ihrer Länge veränderbare Elemente eingesetzt werden.

Es lassen sich Energiewandler-Systeme mit einer gemeinsamen oder mit unterschiedlichen Vorzugsrichtungen einsetzen, letzteres z. B. um Schwingungen in verschiedenen Raumrichtungen zu isolieren. Vorteilhafterweise wird dann für jede Raumrichtung ein separates Abstützelement und eine separate Vorspanneinrichtung verwendet. Für jede Raumrichtung werden dann vorzugsweise jeweils mindestens ein sich zwischen dem Basisanschlusselement und dem Lastanschlusselement erstreckendes Energiewandler-System und mindestens ein sich zwischen dem Lastanschlusselement und dem Abstützelement erstreckendes Energiewandler-System eingesetzt. Wiederum kann dann eine Vorspannung auf die Energiewandler-Systeme ausgeübt werden, ohne dass Schallbrücken zwischen Basiselement und Lastanschlusselement geschaffen werden.

Weiterhin können auch für eine Raumrichtung mehr als zwei Energiewandler-Systeme eingesetzt werden. Dies kann insbesondere dann von Vorteil sein, wenn es sich bei den Energiewandler-Systemen um Aktuator-Systeme handelt, welche nicht nur eine reine Translation des Lastanschlusselements, sondern beispielsweise auch eine Verkippung bewirken sollen. Wenn z. B. zwei Paare von Aktuator-Systemen parallel angeordnet sind, so führt eine ungleiche Ausdehnung der beiden Paare zu einer Verkippung des Lastanschlusselements um eine Achse senkrecht zur Vorzugsrichtung der beiden Paare von Aktuator-Systemen. Analog lässt sich mit mehreren Paaren von Aktuator-Systemen eine Verkippung des Lastanschlusselements um mehrere Achsen erzielen. Auf diese Weise lassen sich beispielsweise auch Torsionsschwingungen im Basisanschlusselement vom Lastanschlusselement isolieren.

In einer weiteren vorteilhaften Ausgestaltung der Erfindung weisen das Basisanschlusselement und das Lastanschlusselement jeweils standardisierte Anschlussgeometrien auf. Bei diesen Anschlussgeometrien kann es sich beispielsweise um Gewinde, Flansche, Schraubbolzen etc. handeln. Dies ermöglicht einen schnellen und kostengünstigen Austausch oder eine Ergänzung bestehender Elemente und Strukturen durch die beschriebene Schnittstelle zur Schwingungsreduktion. Beispielsweise in der Satellitentechnik kann die Schnittstelle auf einfache Weise zwischen den Hauptkörper, der z. B. Störquellen in Form von Motoren enthält, und eine positionsempfindliche Antenne geschaltet werden, ohne dass konstruktive Änderungen der gesamten Anordnung erforderlich sind. Es kann beispielsweise auf standardisierte Flanschgeometrien zurückgegriffen werden.

Vorteilhafter Weise weist die Vorspanneinrichtung ein die Aktuator-Systeme umschließendes Rohr auf. Das Rohr kann kreisförmige, rechteckige oder beliebige Querschnittsgeometrie aufweisen.

Dies ist insbesondere dann von Vorteil, wenn alle Energiewandler-Systeme eine gemeinsame Vorzugsrichtung aufweisen. Das geschlossene Rohr kann starr oder flexibel ausgestaltet sein und ist insbesondere so ausgestaltet, dass die Rohrachse annähernd parallel zur Vorzugsrichtung der Aktuator-Systeme ausgerichtet ist. Das Rohr schützt die Aktuator-Systeme vor Umwelteinflüssen, wie z. B. Feuchtigkeit, Schmutz oder ähnlichem. Weiterhin stabilisiert das Rohr die Energiewandler-Systeme gegen Krafteinwirkungen senkrecht zur Vorzugsrichtung (z. B. Scherkräfte), welche zu mechanischen Beschädigungen der Energiewandler-Systeme führen könnten.

Bei verschiedenen Methoden zur Schwingungsdämpfung ist es von Vorteil, Informationen über die tatsächliche Schwingung des Lastanschlusselements zu generieren. Daher kann ein Sensorsystem zur Bestimmung von beispielsweise Weg, Geschwindigkeit, Beschleunigung oder Kraft mit einem Element der Schnittstelle verbunden bzw. zwischengeschaltet sein. Insbesondere ist es von Vorteil, wenn ein Sensor mit dem Lastanschlusselement verbunden ist. Weitere Sensorsysteme können beispielsweise mit dem Basisanschlusselement verbunden werden.

Bei diesen Sensorsystemen kann es sich beispielsweise um kapazitive oder piezoelektrische Beschleunigungs- oder Kraftsensoren, oder um magnetische, elektrostatische oder interferometrische Positions- oder Geschwindigkeitssensoren handeln.

Die Informationen des mindestens einen Sensorsystems können beispielsweise zur aktiven Schwingungsdämpfung genutzt werden. Dabei werden insbesondere als Energiewandler-Systeme Aktuator-Systeme eingesetzt. Die Signale des Sensorsystems werden einer Regelungselektronik zur Verfügung gestellt. Die Regelungselektronik generiert aus den Sensorsignalen Steuersignale (Zielfunktion), welche über eine Energieversorgung in Stellsignale für die Aktuator-Systeme umgewandelt werden. Durch diese Stellsignale werden die Aktuator-Systeme zu Schwingungen angeregt, welche z. B. gegenphasig zu den zu isolierenden Schwingungen sind und diese am Ort der Last eliminieren oder dämpfen.

In einer Weiterbildung der Erfindung ist mindestens ein Energiewandler-System ganz oder teilweise als Aktuator-System ausgebildet. Dabei soll ein Teil dieses Aktuator-Systems wiederum gleichzeitig als Energiewandler genutzt werden können, welcher mechanische in elektrische Energie umwandeln kann.

In dieser Weiterbildung werden also beide Richtungen der Energiewandlung gleichzeitig genutzt. Während in einem Aktuator typischerweise elektrische Energie in mechanische Energie umgewandelt wird, wird in dieser Ausgestaltung der Erfindung zumindest in einem Teil eines Aktuators gleichzeitig mechanische Energie in elektrische Energie umgewandelt. Aktuatoren, die zu dieser Umkehrung des Wandlerprinzips in der Lage sind, werden auch als multifunktionale Wandlersysteme bezeichnet. Die dabei verwendeten Werkstoffe, die gleichzeitig mechanische Lasten tragen können und als Aktuator und bzw. oder Sensor (siehe unten) wirken können, werden als multifunktionale Werkstoffe bezeichnet.

Die Wandlung kann beispielsweise durch Ausnutzung des piezoelektrischen Effekts, beispielsweise mit Hilfe einer Piezokeramik, erfolgen. Dabei wird ein Druck auf eine Piezokeramik oder Druckschwankungen in einer Piezokeramik in elektrische Signale umgewandelt- Da Piezo-Aktuatoren häufig aus Stapeln vieler Piezokeramik-Schichten bestehen, kann beispielsweise eine Schicht aus diesem Stapel gleichzeitig zur Wandlung mechanischer Energie in elektrische Energie genutzt werden.

Diese Weiterbildung hat verschiedene Vorteile. Zum einen kann zumindest teilweise auf die Nutzung zusätzlicher Sensoren verzichtet werden. Die vom Aktuator-System erzeugten elektrischen Signale dienen gleichzeitig als Sensorsignale und können beispielsweise Informationen über die Beschleunigung oder die Geschwindigkeit der Bewegung einer Nutzlast enthalten.

Auf diese Weise lässt sich z. B. durch die Schnittstelle die Systemantwort des Gesamtsystems auf eine Störung ermitteln. Beispielsweise können die Aktuator-Systeme der Schnittstelle mit einer bestimmten Referenzstrukturstimulation beaufschlagt werden. Diese Referenzstrukturstimulation führt zu einer Strukturantwort des Gesamtsystems in Form mechanischer Schwingungen. Durch Registrieren des elektrischen Signals eines als Energiewandler zwischen mechanischer und elektrischer Energie wirkenden Aktuators lässt sich die Strukturantwort messtechnisch aufzeichnen. Die gemessene Strukturantwort, z. B. der Übertragungseigenschaften zwischen aktuatorischer Referenzstimulation und Sensor oder die Impedanzbestimmung, erlaubt Aussagen über den aktuellen Strukturzustand des Gesamtsystems, beispielsweise durch Vergleich der gemessenen Strukturantwort bzw. Ermittlung von Strukturkennwerten mit in einer Datenbank hinterlegten Referenzstrukturantworten bzw- Referenzstrukturkennwerten.

Ein:weiterer Vorteil der gleichzeitigen Nutzung zumindest eines Teils eines Aktuator-Systems als mechanisch-elektrischer Energiewandler besteht in der Möglichkeit einer Nutzung als passiver oder semi-aktiver Schwingungsdämpfer. Dabei wird eine elektronische Schaltung zur Dissipation der elektrischen Energie eingesetzt.

Im einfachsten Fall besteht diese elektronische Schaltung aus einem ohmschen Widerstand, in dem die elektrische Energie teilweise in Wärme umgewandelt wird. Eine noch effizientere Schwingungsdämpfung lässt sich durch zusätzlichen Einsatz einer oder mehrerer Spulen und/oder eines oder mehrerer Kondensatoren erzielen. So können z. B. die mechanischen Schwingungen der Schnittstelle in periodischen Schwankungen der Ladungen auf den Oberflächen einer Piezokeramik eines Piezo-Aktuators der Schnittstelle resultieren. Dies entspricht periodisch schwankenden Ladungen auf den Platten eines Kondensators. Werden die beiden Platten des Kondensators (also die beiden Oberflächen der Piezokeramik) z. B. über einen ohmschen Widerstand und eine Spule miteinander verbunden, so entspricht die Wirkungsweise der Anordnung der Wirkung eines gedämpften elektrischen Schwingkreises.

Eine weitere Steigerung der Effizienz der Schwingungsdämpfung lässt sich dadurch erzielen, dass anstelle zumindest einer Spule eine sogenannte "synthetische Induktivität" verwendet wird- Diese synthetische Induktivität besteht i. d. R. aus einer Kombination mehrerer ohmscher Widerstände mit einem oder mehreren Operationsverstärkern. Auf diese Weise lassen sich höhere Induktivitäten erzielen als mit herkömmlichen Spulen-Dadurch wird die Dämpfung des Schwingkreises weiter erhöht. Diese Technik wird beispielsweise in D. Mayer, Ch. Linz, and V. Krajenski: Synthetische Induktivitäten für die semi-passive Dämpfung, 5. Magdeburger Maschinenbautage, 2001, beschrieben.

Die Effizienz der Schwingungsdämpfung lässt sich weiter erhöhen, indem mehrere der oben beschriebenen Schnittstellen in einer der beschriebenen Ausgestaltungen und Beschaltungen in Kaskaden hintereinandergeschaltet werden. Dabei wird jeweils das Basisanschlusselement der folgenden Schnittstelle mit dem Lastanschlusselement der vorhergehenden Schnittstelle verbunden.

Im Folgenden wird die Erfindung anhand von Ausführungsbeispielen näher erläutert, die in den Figuren schematisch dargestellt sind. Sie ist jedoch nicht auf die Beispiele beschränkt. Gleiche Bezugsziffern in den einzelnen Figuren bezeichnen gleiche oder funktionsgleiche bzw. hinsichtlich ihrer Funktionen einander entsprechende Elemente. Im Einzelnen zeigt:
- Fig. 1: einen Satelliten mit einer aktiven Entkopplung von Störquellen und sensiblen Komponenten entsprechend dem Stand der Technik;
- Fig. 2: eine strukturmechanische Schnittstelle zur Schwingungsdämpfung;
- Fig. 3: eine vereinfachte elektrische Beschaltung zur aktiven Schwingungsdämpfung der in Fig. 2 dargestellten Schnittstelle;
- Fig. 4: eine Ansteuerung der Aktuator-Systeme der Schnittstelle in Fig. 2 zur gezielten Verkippung einer Nutzlast;
- Fig. 5: die möglichen verkippungsachsen bei einer Schnittstelle mit in 120°-Rotationssymmetrie angeordneten Aktuatoren;
- Fig. 6: eine alternative Ausgestaltung einer strukturmechanischen Schnittstelle zur Schwingungsdämpfung;
- Fig. 7: eine weitere alternative Ausgestaltung einer strukturmechanischen Schnittstelle zur Schwingungsdämpfung;
- Fig. 8: 8 eine strukturmechanische Schnittstelle zur Schwingungsdämpfung in perspektivischer Teildarstellung mit ausgeschnittenem Segment;
- Fig. 9: eine strukturmechanische Schnittstelle zur Schwingungsdämpfung in zwei senkrecht aufeinander stehenden Raumrichtungen;
- Fig. 10: eine strukturmechanische Schnittstelle zur Schwingungsdämpfung in drei nicht senkrecht aufeinanderstehenden Raumrichtungen;
- Fig. 11: eine Anordnung zur teilweisen Nutzung eines Piezo-Aktuators einer strukturmechanischen Schnittstelle als Sensor für eine Strukturanalyse;
- Fig. 12: eine elektrische Beschaltung eines Teils eines Piezo-Aktuators einer strukturmechanischen Schnittstelle zur passiven Schwingungsdämpfung; und
- Fig. 13: eine zu Fig. 12 alternative elektrische Beschaltung eines Teils eines Piezo-Aktuators einer strukturmechanischen Schnittstelle zur passiven Schwingungsdämpfung.

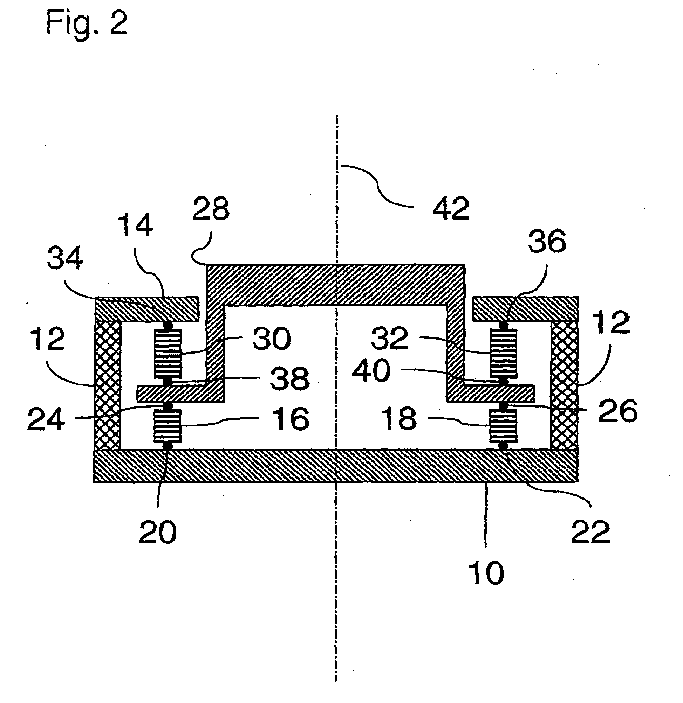

In Fig. 2 ist eine bevorzugte Ausführung der beschriebenen Schnittstelle zur Schwingungsdämpfung dargestellt. Ein Basisanschlusselement 10 ist über eine Vorspanneinrichtung 12 mit einem Abstützelement 14 verbunden. Ein erstes Energiewandler-System, welches aus den Piezo-Aktuatoren 16 und 18 besteht, erstreckt sich zwischen den Angriffspunkten 20 bzw. 22 auf dem Basisanschlusselement 10 und den Angriffspunkten 24 bzw. 26 auf dem Lastanschlusselement 28. Ein zweites Energiewandler-System, welches aus den Piezo-Aktuatoren 30 und 32 besteht, erstreckt sich zwischen den Angriffspunkten 34 bzw. 36 auf dem Abstützelement 14 und den Angriffspunkten 38 bzw. 40 auf dem Lastanschlusselement 28.

Die dargestellte Anordnung zeigt lediglich einen Querschnitt durch die strukturmechanische Schnittstelle. Die Anordnung dieses Beispiels ist bis auf die Piezo-Aktuatoren 16, 30, 18, 32 symmetrisch zur eingezeichneten Symmetrieachse 42. Bei dem Basisanschlusselement 10 handelt es sich also um eine Kreisscheibe, bei dem Abstützelement 14 um eine Ringscheibe. Das Lastanschlusselement 28 hat eine zylinderhutförmige Gestalt, wobei sich ein Teil des Lastanschlusselements im Zwischenraum zwischen der Vorspanneinrichtung 14 und dem Basisanschlusselement 10 befindet und ein Teil außerhalb. Die Vorspanneinrichtung 12 besteht aus einem elastischen Rohr mit zum Außendurchmesser der Kreisscheibe des Basisanschlusselements 10 und zum Außendurchmesser der Ringscheibe des Abstützelements 14 identischen Durchmesser. Die Vorspannung erfolgt dadurch, dass die Länge des elastischen Rohrs so gewählt wird, dass das Rohr im Ruhezustand der Anordnung gedehnt wird. Dadurch wird gleichzeitig auf alle Piezo-Aktuatoren eine Druckvorspannung ausgeübt.

Anstelle der dargestellten vier Piezo-Aktuatoren können auch mehr als vier Aktuatoren verwendet werden. Vorzugsweise sind diese Piezo-Aktuatoren rotationssymmetrisch zur Symmetrieachse 42 angeordnet.

Das Basisanschlusselement 10 und das Lastanschlusselement 28 sind so ausgestaltet, dass eine einfache und schnelle Montage der Schnittstelle zwischen eine durch Störquellen 1 zu Schwingungen angeregte Basisseite und eine zu isolierende Last erfolgen kann. Zu diesem Zweck sind das Basisanschlusselement 10 und das Lastanschlusselement 28 mit Gewindebohrungen mit Standardmaßen versehen.

Werden die Piezo-Aktuatoren 16 und 18 durch gleichartige elektrische Ansteuerungen verlängert und die Piezo-Aktuatoren 30 und 32 in gleichem Maße durch geeignete elektrische Ansteuerungen verkürzt, so wird der Abstand zwischen Lastanschlusselement 28 und Basisanschlussplatte 10 vergrößert. Entsprechend wird durch eine Verkürzung der Piezo-Aktuatoren 16 und 18 und eine gleichzeitige Verlängerung der Piezo-Aktuatoren 30 und 32 der Abstand zwischen Lastanschlusselement 28 und Basisanschlussplatte 10 verringert. Die elektrischen Ansteuerungen der Piezo-Aktuatoren sind in Fig. 2 nicht dargestellt.

Werden die Piezo-Aktuatoren 16 und 30 sowie 18 und 32 jeweils gegenphasig z. B. mit einer sinusförmigen Wechselspannung geeigneten Amplitude und Frequenz angesteuert, so schwingt das Lastanschlusselement 28 relativ zum Basisanschlusselement 10 auf und ab. Dies lässt sich beispielsweise zur aktiven Schwingungsdämpfung nutzen.

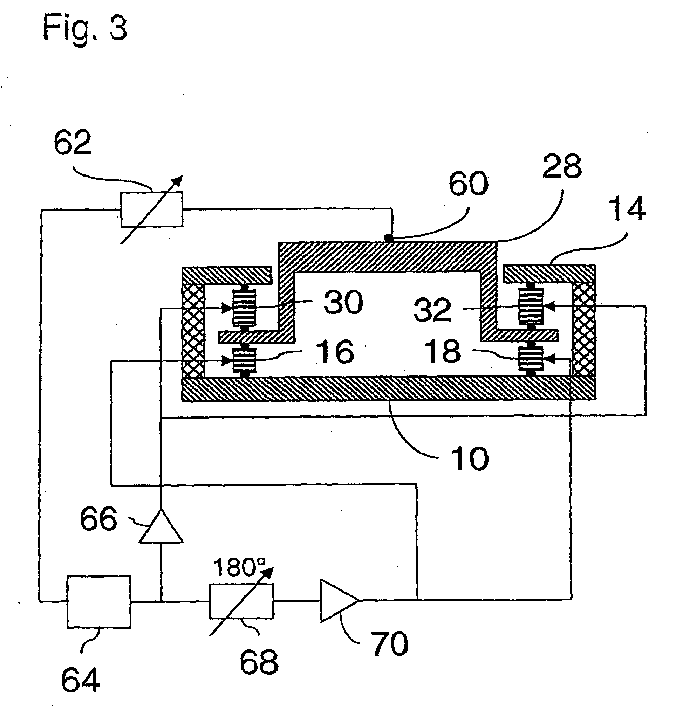

In Fig. 3 ist eine elektrische Beschaltung der Schnittstelle gemäß Fig. 2 dargestellt. Ein auf dem Lastanschlusselement 28 fixierter Beschleunigungssensor 60 ist über einen Phasenschieber 62 mit dem Eingang einer Regelungselektronik 64 verbunden. Ein Ausgang der Regelungselektronik 64 ist über einen Nachverstärker 66 mit den Piezo-Aktuatoren 30 und 32 verbunden. Weiterhin ist der Ausgang der Regelungselektronik 64 über einen 180°-Phasenschieber 68 und einen zweiten Nachverstärker 70 mit den Piezo-Aktuatoren 16 und 18 verbunden.

Sollen Schwingungen des Basisanschlusselements 10 vom Lastanschlusselement 28 isoliert werden, so werden diese Schwingungen mit Hilfe des Beschleunigungssensors 60 detektiert. Das Sensorsignal wird dann mit Hilfe der Regelungselektronik 64 und des ersten Phasenschiebers 62 in geeignete gegenphasige Ansteuersignale für die Piezo-Aktuatoren 16 und 30 sowie 18 und 32 umgewandelt. Der erste Phasenschieber 62 kann beispielsweise dazu dienen, Phasenverschiebungen zwischen der tatsächlichen Bewegung des Lastanschlusselements 28 und den Sensorsignalen auszugleichen. Diese Notwendigkeit hängt u. a. von der Wirkungsweise des Sensors 60 ab. Bei sinusförmigen Schwingungen beispielsweise, in denen eine Phasenverschiebung von 90° zwischen Beschleunigung und Geschwindigkeit und zwischen Geschwindigkeit und Position auftritt, müsste das Signal eines Geschwindigkeitssensors um 90° phasenverschoben werden, um eine geeignete Längenänderung der Piezo-Aktuatoren vornehmen zu können. Auch Verzögerungen in der Regelungselektronik 64 und dadurch entstehende Phasenverschiebungen können durch den Phasenschieber 62 ausgeglichen werden.

Die in der Regelungselektronik 64 erzeugten Signale werden in den Nachverstärkern 66 und 70 weiter verstärkt und den Aktuatoren 30 und 32 bzw. 16 und 18 zugeführt. Der zweite Phasenschieber 68 ist erforderlich, da die beiden Aktuator-Systeme 16, 18 und 30, 32 i. d. R. gegenphasig angesteuert werden müssen.

Die Piezo-Aktuatoren 16 und 30 sowie 18 und 32 werden jeweils zu gegenphasigen Schwingungen angeregt, durch welche die Schwingungen auf das Lastanschlusselement 28 übertragen werden. Im Lastanschlusselement 28 überlagern sich die Schwingungen des Basisanschlusselements 10 mit den durch die Piezo-Aktuatoren angeregten Schwingungen - bei geeigneter Phasenwahl - destruktiv, so dass die Schwingungen des Lastanschlusselements 28 gedämpft werden.

In der dargestellten Anordnung sind die Piezo-Aktuatoren 16, 18 des ersten Aktuator-Systems sowie die Piezo-Aktuatoren 30, 32 des zweiten Aktuator-Systems jeweils gleichartig ausgestaltet, d. h. gleiche Ansteuersignale bewirken gleiche Längenänderungen. Daher kann für die Aktuatoren eines Aktuator-Systems jeweils ein einziger Nachverstärker 66 bzw. 70 verwendet werden. Werden innerhalb eines Aktuator-Systems unterschiedliche Aktuatoren verwendet, so müssten für die Aktuatoren jeweils unterschiedliche Nachverstärker eingesetzt werden.

Die Ansteuerung der Piezo-Aktuatoren ist stark vereinfacht dargestellt. In der Regel weist jeder Piezo-Aktuator zwei elektrische Anschlüsse auf, die mit unterschiedlichen Spannungen beaufschlagt werden müssen. Die Spannungsdifferenz zwischen den elektrischen Anschlüssen bestimmt die Längenausdehnung des Piezo-Aktuators.

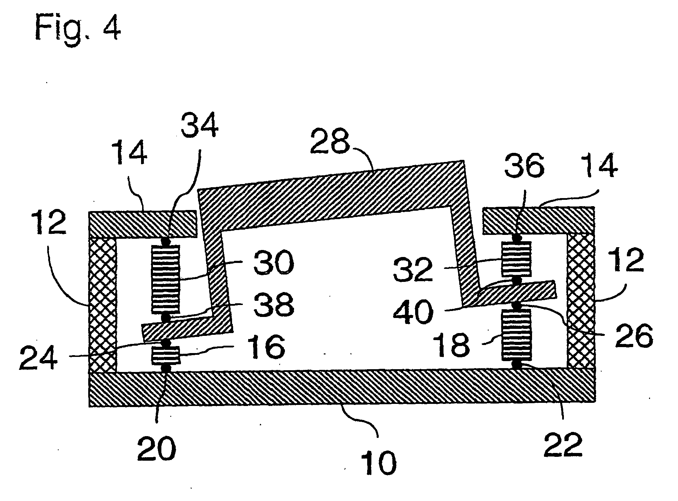

In Fig. 4 ist dargestellt, wie durch eine gezielte Ansteuerung der Piezo-Aktuatoren der Anordnung in Fig. 2 auch Kippschwingungen des Basisanschlusselements 10 ausgeglichen bzw. gedämpft werden können. Indem der Piezo-Aktuator 30 durch ein geeignetes elektrisches Ansteuersignal auf eine größere Länge eingestellt wird als der Piezo-Aktuator 32 und entsprechend der Piezo-Aktuator 16 auf eine geringere Länge als der Piezo-Aktuator 18, wird das Lastanschlusselement 28 relativ zur Ebene des Basisanschlusselements 10 gekippt. Dazu benötigen die Piezo-Aktuatoren 16, 18, 30, 32 (nicht gezeigte) individuelle elektrische Ansteuerungen.

Treten im Basisanschlusselement 10 Kippschwingungen auf, so können diese beispielsweise durch Vergleich der Signale verschiedener, an unterschiedlichen Orten auf der Oberfläche des Lastanschlusselements 28 angebrachter Sensoren detektiert werden. Die Signale werden dann mit Hilfe einer Regelungselektronik 64 in geeignete Ansteuersignale der Piezo-Aktuatoren umgewandelt, so dass das Lastanschlusselement 28 relativ zum Basisanschlusselement 10 eine Kippschwingung ausführt, die sich mit der Kippschwingung des Basisanschlusselements 10 destruktiv überlagert und diese somit im Lastanschlusselement 28 dämpft.

Die Regelungselektronik 64 kann beispielsweise so aufgebaut sein, dass aus den Signalen zweier auf dem Lastanschlusselement 28 fixierter Sensoren ein Summen- und ein Differenzsignal gebildet wird, die in getrennten Reglern zu Ansteuersignalen für die Piezo-Aktuatoren umgewandelt werden. Das Ansteuersignal für jeden Piezo-Aktuator ist dann eine Überlagerung aus Signalen beider Regler.

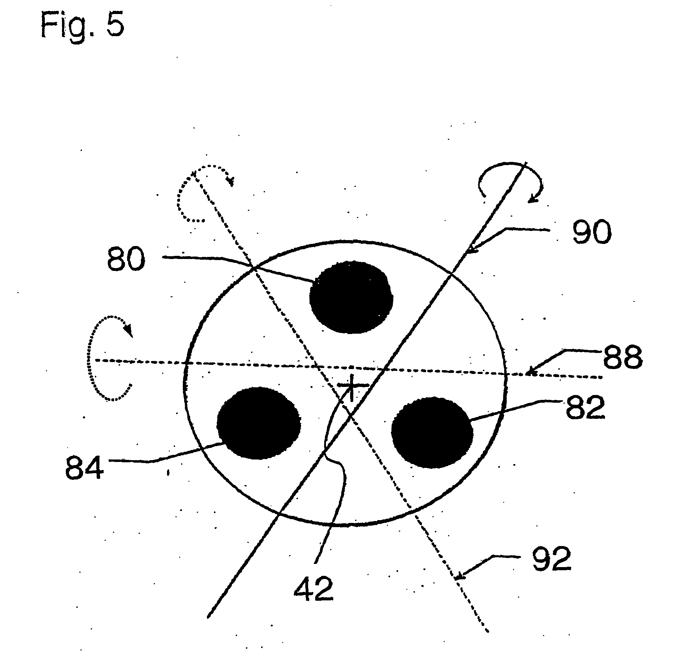

In diesem Ausführungsbeispiel, in dem lediglich zwei Aktuator-Paare 16 und 30 bzw. 18 und 32 verwendet werden, ist nur eine Verkippung des Lastanschlusselements 28 um eine Achse senkrecht zur Symmetrieachse 42 möglich. Werden, wie oben beschrieben, mehr Aktuator-Paare eingesetzt, so sind Verkippungen um mehrere Achsen senkrecht zur Symmetrieachse 42 möglich. In Fig. 5 ist als Beispiel eine Schnittstelle mit drei Aktuator-Paaren 80, 82, 84 skizzenhaft in Draufsicht dargestellt. Nur die Aktuator-Paare 80, 82, 84 und die Kippachsen sind dargestellt. Jedes der Aktuator-Paare 80., 82 und 84 besteht jeweils aus einem Aktuator, der sich zwischen einem Angriffspunkt auf dem Basisanschlusselement 10 und einem Angriffspunkt auf dem Lastanschlusselement 28 erstreckt und einem Aktuator, der sich zwischen einem Angriffspunkt auf dem Abstützelement 14 und einem Angriffspunkt auf dem Lastanschlusselement 28 erstreckt. Die Aktuatoren jeweils eines Aktuator-Paars sind in dieser Ausführung linear senkrecht zur Zeichenebene angeordnet und daher nicht einzeln zu erkennen. Die Aktuator-Paare 80, 82, 84 sind 120°-rotationssymmetrisch um die zur Zeichenebene senkrechte Symmetrieachse 42 angeordnet.

Die Anordnung erlaubt eine Verkippung des Lastanschlusselements 28 um die drei Kippachsen 88, 90 und 92, welche jeweils senkrecht zur Symmetrieachse 42 angeordnet sind.

Die Anordnung bietet den Vorteil, dass neben Kippschwingungen um verschiedene Achsen auch Torsionsschwingungen des Basisanschlusselements 10 gedämpft werden können. Dies kann beispielsweise dadurch erfolgen, dass die Aktuator-Paare 80, 82 und 84 zyklisch angesteuert werden.

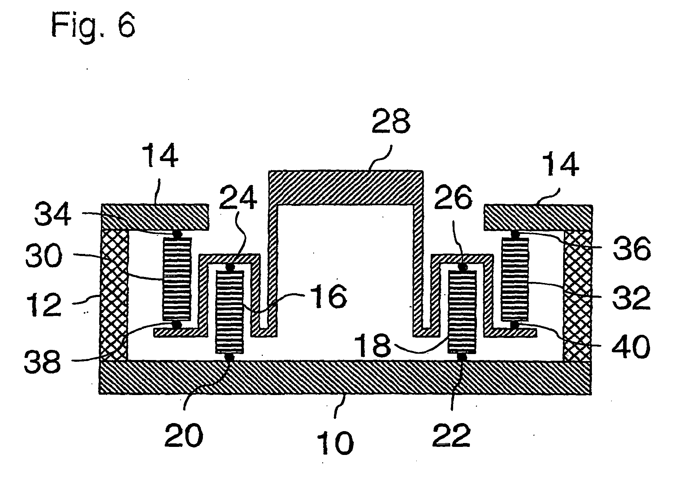

In Fig. 6 ist ein Beispiel dargestellt, welches zeigt, dass die Angriffspunkte eines der Aktuatoren eines Aktuator-Paares nicht in einer Linie angeordnet sein müssen. Das Lastanschlusselement 28 ist in dieser Ausführung so ausgestaltet, dass die Summe der Abstände zwischen den Angriffspunkten 34 bzw. 36 und 38 bzw. 40 und der Abstände zwischen den Angriffspunkten 24 bzw. 26 und 20 bzw. 22 größer ist als der Abstand zwischen dem Basisanschlusselement 10 und dem Abstützelement 14. Mit anderen Worten, das Lastanschlusselement 28 kann so ausgestaltet werden, dass die Summe der Längen eines Aktuator-Paares 16, 30 bzw. 18, 32 nicht dem Abstand zwischen Basisanschlusselement 10 und Abstützelement 14 entsprechen muss. Es sind auch Ausgestaltungen möglich, bei denen die Länge eines einzelnen Aktuators den Abstand zwischen Basisanschlusselement 10 und Abstützelement 14 überschreitet.

Dadurch kann auf verschiedene Längen von Aktuatoren zurückgegriffen werden, ohne dass die äußere Bauform, die im wesentlichen durch den Abstand zwischen Basisanschlusselement 10 und Abstützelement 14 bestimmt wird, signifikant geändert werden muss. Da die maximale Längenänderung eines Piezo-Aktuators von der Baulänge des Piezos abhängt, kann so durch die Verwendung längerer Piezo-Aktuatoren eine Verlängerung des Stellwegs der Schnittstelle erzielt werden. Weiterhin lassen sich durch die Verwendung verschiedener Piezo-Aktuatoren Schwingungen unterschiedlicher Schwingungsfrequenzen dämpfen, da auch die Resonanzfrequenz der Piezo-Aktuatoren signifikant von der Baulänge der Piezokeramik abhängt.

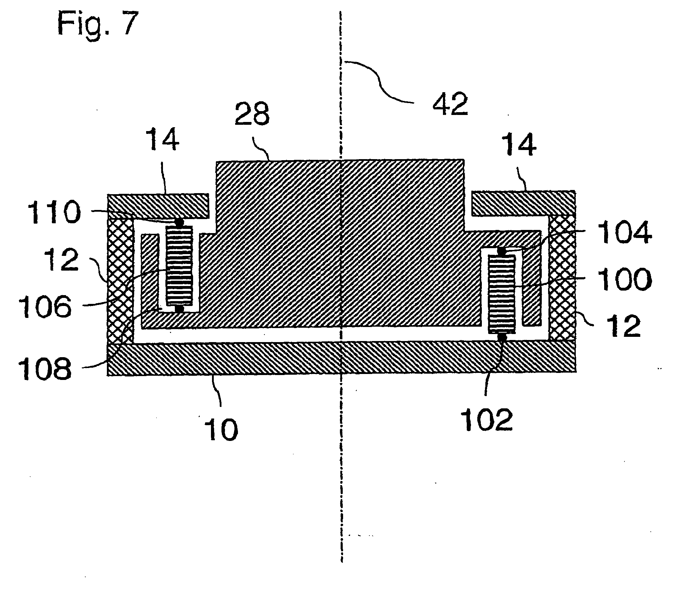

In Fig. 7 ist ein Ausführungsbeispiel dargestellt, welches zeigt, dass die sich zwischen Angriffspunkten auf dem Basisanschlusselement 10 und dem Lastanschlusselement 28 erstreckenden Aktuatoren 100 und die sich zwischen Angriffspunkten auf dem Abstützelement 14 und auf dem Lastanschlusselement 28 erstreckenden Aktuatoren 106 nicht auf der gleichen Seite der Symmetrieachse 42 angeordnet sein müssen. Ein Piezo-Aktuator 100 erstreckt sich zwischen einem Angriffspunkt 102 auf dem Basisanschlusselement 10 und einem Angriffspunkt 104 auf dem Lastanschlusselement 28. Ein weiterer Piezo-Aktuator 106 erstreckt sich zwischen einem Angriffspunkt 108 auf dem Lastanschlusselement 28 und einem Angriffspunkt 110 auf dem Abstützelement 14.

In vielen Fällen werden die Aktuatoren so angeordnet, das sich insgesamt die auf das Lastanschlusselement 28 ausgeübten Drehmomente gegenseitig aufheben. Dadurch wird sichergestellt, dass alle Aktuatoren stets unter einer Druckvorspannung stehen. In der in Fig. 7 dargestellten Anordnung kann dies z. B. dadurch erfolgen, dass benachbart zu dem Piezo-Aktuator 106 weitere, in dieser Schnittdarstellung nicht abgebildete, - Piezo-Aktuatoren angeordnet werden, welche sich zwischen Angriffspunkten auf dem Basisanschlusselement 10 und Angriffspunkten auf dem Lastanschlusselement 28 erstrecken und so das durch den Piezo-Aktuator 106 auf das Lastanschlusselement 28 ausgeübte Drehmoment kompensieren. Beispielsweise kann die Anordnung sechs 120°-rotationssysymmetrische Piezo-Aktuatoren aufweisen. Diese sind so angeordnet, dass sich jeweils ein Aktuator des ersten Aktuator-Systems (d. h. Erstreckung zwischen Angriffspunkten auf dem Basisanschlusselement 10 und dem Lastanschlusselement 28) und ein Aktuator des zweiten Aktuator-Systems (d. h. Erstreckung zwischen Angriffspunkten auf dem Abstützelement 14 und dem Lastanschlusselement 28) relativ zur Symmetrieachse 42 gegenüberliegen. Benachbarte Aktuatoren gehören zu unterschiedlichen Aktuator-Systemen.

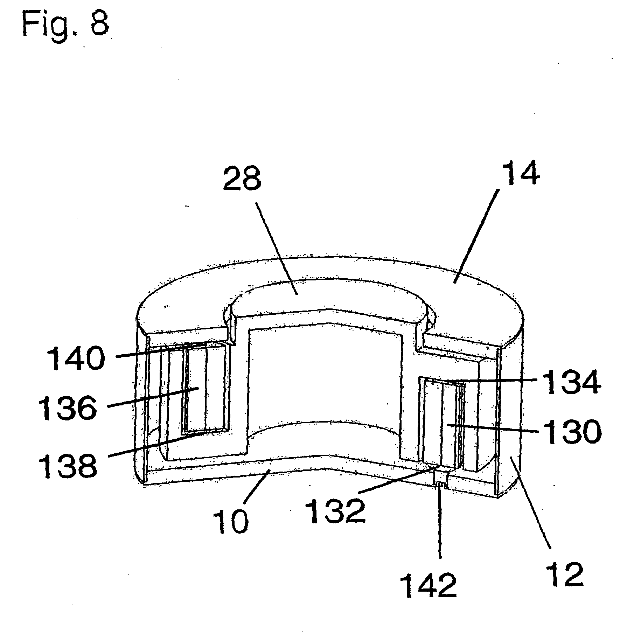

In Fig. 8 ist eine Schnittstelle zur Schwingungsdämpfung in perspektivischer Teildarstellung mit ausgeschnittenem Segment dargestellt. Ein Piezo-Aktuator 130 erstreckt sich zwischen einem Angriffspunkt 132 auf dem Basisanschlusselement 10 und einem Angriffspunkt 134 auf dem Lastanschlusselement 28. Ein weiterer Piezo-Aktuator 136 erstreckt sich zwischen einem Angriffspunkt 138 auf dem Lastanschlusselement 28 und einem Angriffspunkt 140 auf dem Abstützelement 14.

In dieser Darstellung ist zu erkennen, dass sowohl das Basisanschlusselement 10 als auch die Oberfläche des Lastanschlusselements 28 für Montagezwecke frei zugänglich sind. Die Vorspanneinrichtung 12 ist als elastisches, zylindrisches Rohr ausgestaltet, welches die Aktuator-Systeme vollständig umschließt und diese so vor unerwünschten Belastungen durch Scherkräfte senkrecht zu ihrer Vorzugsrichtung und vor Umwelteinwirkungen schützt. Die elektrischen Zuführungen zu den - Piezo-Aktuatoren können beispielsweise durch eine Öffnung 142 im Basisanschlusselement 10 zu den Piezo-Aktuatoren 130 und 136 geführt werden.

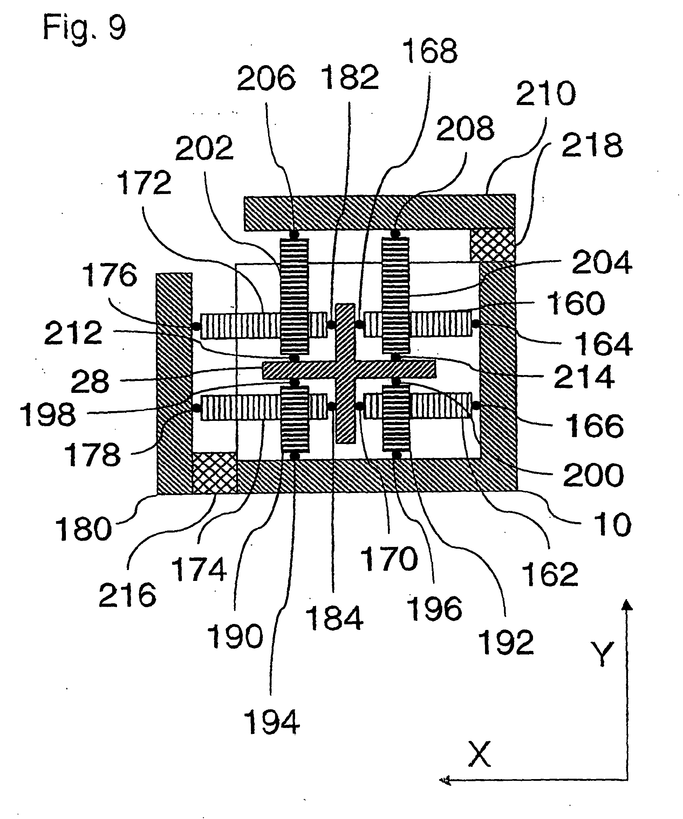

In Fig. 9 ist eine Draufsicht auf eine Anordnung dargestellt, welche den Einsatz der Erfindung zur Schwingungsdämpfung in verschiedenen Raumrichtungen zeigt. Ein aus den Piezo-Aktuatoren 160 und 162 bestehendes Aktuator-System erstreckt sich zwischen den Angriffspunkten 164 bzw. 166 auf dem Basisanschlusselement 10 und den Angriffspunkten 168 bzw. 170 auf dem Lastanschlusselement 28. Ein aus den Piezo-Aktuatoren 172 und 174 bestehendes Aktuator-System erstreckt sich zwischen den Angriffspunkten 176 bzw. 178 auf einem ersten Abstützelement 180 und den Angriffspunkten 182 bzw. 184 auf dem Lastanschlusselement 28. Die Aktuatoren 160, 162, 172 und 174 weisen dieselbe Raumrichtung (im Folgenden als X-Richtung bezeichnet) als Vorzugsrichtung auf.

Ein aus den Piezo-Aktuatoren 190 und 192 bestehendes Aktuator-System erstreckt sich zwischen den Angriffspunkten 194 bzw. 196 auf dem Basisanschlusselement 10 und den Angriffspunkten 198 bzw. 200 auf dem Lastanschlusselement 28- Ein aus den - Piezo-Aktuatoren 202 und 204 bestehendes Aktuator-System erstreckt sich zwischen den Angriffspunkten 206 bzw. 208 auf einem zweiten Abstützelement 210 und den Angriffspunkten 212 bzw. 214 auf dem Lastanschlusselement 28. Die Aktuatoren 190, 192, 202 und 204 weisen dieselbe Raumrichtung (im Folgenden als Y-Richtung bezeichnet) als Vorzugsrichtung auf, wobei diese Raumrichtung senkrecht zur obengenannten Vorzugsrichtung der Aktuatoren 160, 162, 172 und 174 steht.

Das Abstützelement 14 besteht in diesem Ausführungsbeispiel aus zwei separaten Abstützelementen 180 und 210. Diese sind jeweils mit einer Vorspanneinrichtung 216 bzw. 218 (beispielsweise einem Gummiquader) mit dem Basisanschlusselement 10 verbunden.

Die Montage einer Last auf das in diesem Beispiel einen kreuzförmigen Querschnitt aufweisende Lastanschlusselement 28 kann dadurch erfolgen, dass das Lastanschlusselement zusätzlich eine ebene Montageplatte aufweist, welche auf das Kreuz des Lastanschlusselements aufgebracht ist.

Die Anordnung weist verschiedene Vorteile auf. Zum einen können transversale Schwingungen des Basisanschlusselements 10 in X- und Y-Richtung durch geeignete Ansteuerungen der Piezo-Aktuatoren gedämpft werden. Dabei kann für jede Raumrichtung beispielsweise eine elektronische Schaltung zur aktiven Schwingungsdämpfung analog zu der in Fig. 3 beschriebenen Schaltung eingesetzt werden. Zusätzlich können auch Kippschwingungen des Basisanschlusselements 10 gegen die X- bzw. Y-Achse durch geeignete Ansteuerung der Piezo-Aktuatoren analog zu Fig. 4 ausgeglichen werden-Durch die Vorspanneinrichtungen 216 und 218 werden die Piezo-Aktuatoren in die beiden Raumrichtungen unterschiedlich vorgespannt. Dies kann für Anwendungen von Vorteil sein, bei denen beispielsweise aufgrund unterschiedlicher zu erwartender Schwingungen in X- und Y-Richtung in diesen beiden Raumrichtungen unterschiedliche Arten von Piezo-Aktuatoren eingesetzt werden sollen.

Zusätzlich zu den hier dargestellten Aktuatoren in X- und Y-Richtung lassen sich analog auch noch zusätzliche Aktuatoren in der zur X- und Y-Richtung senkrechten Raumrichtung einsetzen. Auch hierfür bietet sich wieder ein separates Abstützelement an Vorzugsweise ist dieses Abstützelement wieder so ausgestaltet, dass das Lastanschlusselement 28 für Montagezwecke frei zugänglich ist.

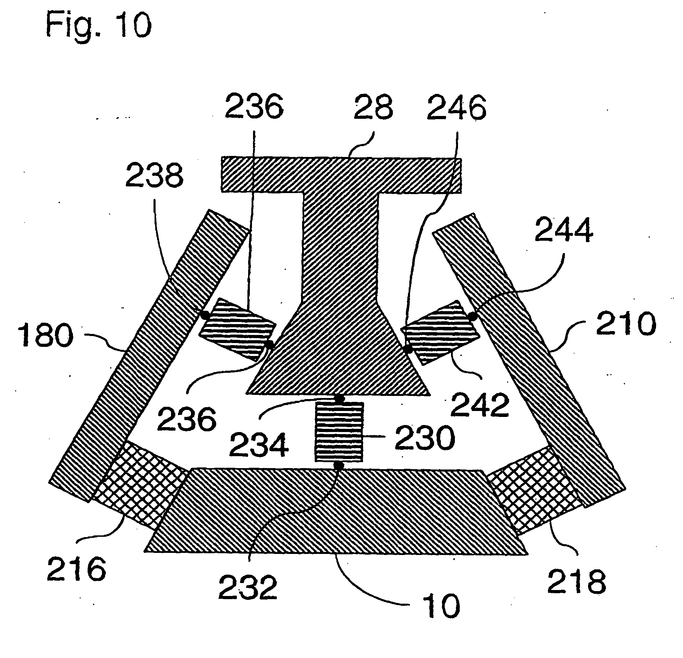

In Fig. 10 ist eine zu Fig. 9 alternative Anordnung zur Schwingungsdämpfung in verschiedenen Raumrichtungen dargestellt. Die Anordnung weist, wie die Anordnung in Fig. 9, wiederum ein Basisanschlusselement 10 und zwei Abstützelemente 180 und 210 auf, die mit dem Basisanschlusselement 10 über die Vorspanneinrichtungen 216 bzw. 218 verbunden sind. Ein erster Piezo-Aktuator 230 erstreckt sich zwischen einem Angriffspunkt 232 auf dem Basisanschlusselement 10 und einem Angriffspunkt 234 auf dem Lastanschlusselement 28. Ein zweiter Piezo-Aktuator 236 erstreckt sich zwischen einem Angriffspunkt 238 auf dem Abstützelement 180 und einem Angriffspunkt 240 auf dem Lastanschlusselement 28. Ein dritter Piezo-Aktuator 242 erstreckt sich zwischen einem Angriffspunkt 244 auf dem Abstützelement 210 und einem Angriffspunkt 246 auf dem Lastanschlusselement 28.

Die Anordnung zeigt, dass es nicht zwingend erforderlich ist, dass jeweils ein sich zwischen dem Basisanschlusselement 10 und dem Lastanschlusselement 28 erstreckender Aktuator und ein sich zwischen einem Abstützelement und dem Lastanschlusselement 28 erstreckender Aktuator gleiche Vorzugrichtung aufweisen.

Alternativ zu der in Fig. 10 dargestellten Anordnung lassen sich auch noch weitere Piezo-Aktuatoren zur Dämpfung von Schwingungen in weiteren Raumrichtungen einsetzen. So könnten beispielsweise vier Piezo-Aktuatoren und drei Abstützelemente so angeordnet werden, dass die Piezo-Aktuatoren jeweils in die Ecken eines auf einer seiner Spitze stehenden Tetraeders weisen.

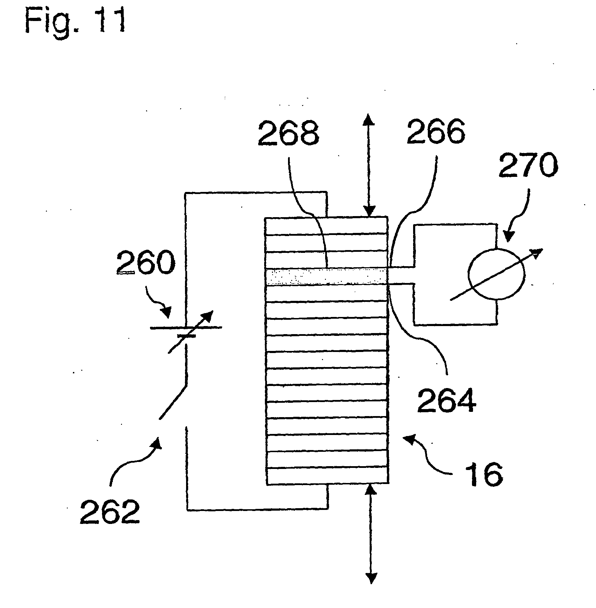

In Fig. 11 ist dargestellt, wie ein Piezo-Aktuator als Sensor für eine Strukturanalyse genutzt werden kann. Es handelt sich um eine Detailansicht eines beliebigen Piezo-Aktuators aus einem der oben angeführten Ausführungsbeispiele, also beispielsweise um den Piezo-Aktuator 16 in Fig. 2. Der Piezo-Aktuator besteht in diesem Beispiel aus einem Stapel mehrerer Piezokeramik-Elemente.

Durch eine variable spannungsquelle 260 wird der Piezo-Aktuator 16 mit einer bestimmten Spannung beaufschlagt, wobei der Schalter 262 zunächst geschlossen ist. Wird dann der Schalter 262 schlagartig geöffnet, so ändert sich die Länge des Piezo-Aktuators 16 plötzlich. Das Gesamtsystem, also auch die hier nicht dargestellten anderen Elemente wie z. B. das Lastanschlusselement 28, beginnt zu schwingen. Man bezeichnet dies als die Strukturantwort des Gesamtsystems auf die Stimulation durch Öffnen des Schalters 262.

Die Schwingungen des Gesamtsystems wiederum bewirken einen sich periodisch ändernden Druck auf den Piezo-Aktuator 16. Diese Druckschwankungen resultieren aufgrund des Piezoeffektes in Schwankungen der elektrischen Spannung zwischen den Elektroden 264 und 266 eines Piezokeramik-Elements 268 des Piezo-Aktuators 16. Mit Hilfe eines Messgerätes 270 lassen sich diese Spannungsschwankungen registrieren und aufzeichnen.

Anstelle eines einfachen Ausschaltens der an den Piezo-Aktuator 16 angelegten Spannung lässt sich das Gesamtsystem auch noch durch andere Spannungsverläufe stimulieren. Beispielsweise kann eine einfache Sinusspannung verwendet werden oder ein Spannungspuls- Die jeweilige Strukturantwort des Gesamtsystems auf verschiedene Arten von Stimulationen lassen sich durch Vergleich mit Simulationswerten oder durch Vergleich mit Referenzstrukturantworten für eine Systemanalyse des Gesamtsystems nutzen. Wird beispielsweise die Strukturschnittstelle in einen Trägerarm eines Satellitensystems oder in ein FederDämpfer-System im Fahrwerksbereich eines Kraftfahrzeugs integriert, so können durch regelmäßige Strukturanalysen z. B. frühzeitig Defekte (z. B. durch Materialermüdung etc-) detektiert und geeignete Gegenmaßnahmen ergriffen werden.

Weiterhin kann das als Sensor wirkende Piezokeramik-Element 268 in Fig. 11 auch für eine aktive Schwingungsdämpfung gemäß Fig. 3 eingesetzt werden. Anstelle des Signals des Beschleunigungssensors 60 in Fig. 3 wird nun die zwischen den Elektroden 264 und 266 abfallende Spannung (nach geeigneter Phasenverschiebung im Phasenschieber 62) als Eingangssignal für die Regelungselektronik 64 verwendet. Auf diese Weise kann auf das zusätzliche Einbringen eines Sensors in die Schnittstelle verzichtet werden.

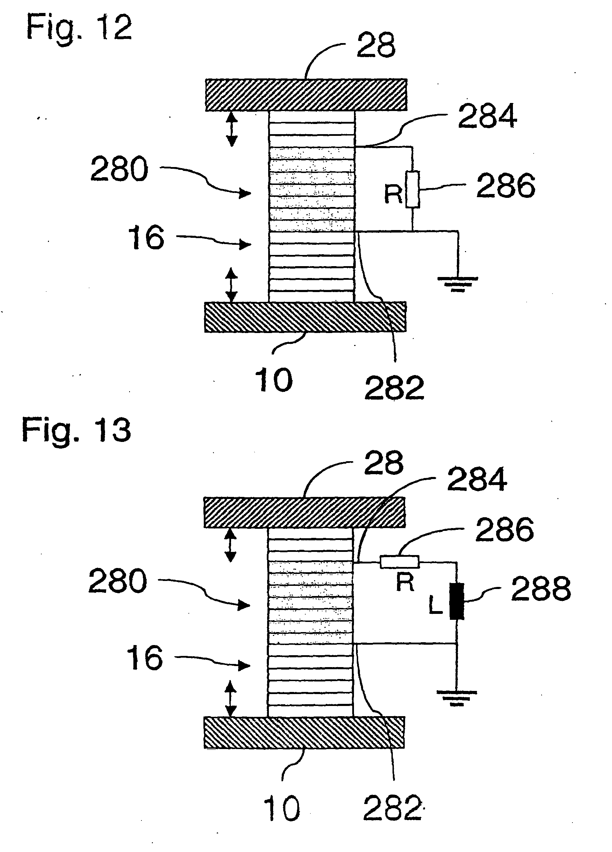

In den Figuren 12 und 13 sind mögliche Beschaltungen der Energiewandler zur Schwingungsdämpfung dargestellt. Es handelt sich wiederum um einen beliebigen Piezo-Aktuator der Schnittstelle, wobei auch mehrere Aktuatoren gleichzeitig in dieser oder ähnlicher Weise beschaltet werden können. Im Folgenden wird angenommen, dass es sich um den Aktuator 16 handelt, welcher sich zwischen dem Basisanschlusselement 10 und dem Lastanschlusselement 28 erstreckt. Das Basisanschlusselement 10 und das Lastanschlusselement 28 sind stark vereinfacht dargestellt, die Angriffspunkte 20 und 24 und die übrigen Komponenten der Schnittstelle sind aus Vereinfachungsgründen nicht dargestellt.

Der Piezo-Aktuator 16 in den Figuren 12 und 13 ist, ähnlich zu der in Fig. 11 dargestellten Anordnung, wieder als Stapel mehrerer (in diesem Fall sechzehn) Piezokeramikelemente ausgestaltet. Die (von der Seite des Basisanschlusselements 10 her gezählt.) Piezokeramikelemente 7 bis 13 sind derart zu einer Einheit 280 zusammengefasst, dass das elektrische Potenzial dieser Einheit zwischen einem dem Basisanschlusselement 10 naheliegenden Anschluss 282 der Einheit 280 und einem dem Lastanschlusselement 28 naheliegenden Anschluss 284 der Einheit 280 abgegriffen werden kann.

In Fig. 12 sind die Anschlüsse 282 und 284 mit jeweils einem Ende eines ohmschen Widerstands 286 verbunden- Weiterhin ist der Anschluss 282 mit Massepotenzial verbunden. In Fig. 13 ist der Anschluss 282 mit einer Induktivität 288 verbunden. Diese Induktivität 288 ist mit einem ohmschen Widerstand 286 verbunden, welcher wiederum mit dem Anschluss 284 verbunden ist-Weiterhin ist der Anschluss 282 mit Massepotenzial verbunden. Wenn das Lastanschlusselement 28 relativ zum Basisanschlusselement 10 mechanische Schwingungen ausführt, so resultiert dies in periodisch schwankendem Druck auf den Piezo-Aktuator 16. Diese Druckschwankungen führen aufgrund des piezoelektrischen Effekts zu Schwankungen der Ladung auf den gegenüberliegenden Oberflächen der Einheit 280. Diese Ladungsschwankungen resultieren in einer Schwankung der Spannung zwischen den Anschlüssen 282 und 284, was zu einem periodischen Stromfluss durch die elektrische Beschaltung führt.

Die Anordnung in Fig. 13 wirkt wie ein aus einer Kapazität, einer Induktivität und einem ohmschen Widerstand bestehender gedämpfter Serienschwingkreis. Die Anschlüsse 282 und 284 wirken dabei wie die Platten eines Kondensators, deren Ladung periodisch variiert. Bei jeder Schwingung wird ein Teil der elektrischen Energie im Ohmschen Widerstand 286 in thermische Energie umgewandelt und die Schwingung dadurch gedämpft. Die Auswahl geeigneter ohmscher Widerstände und Induktivitäten erfolgt entsprechend dem in N.W. Hagood and A. von Flotow: Damping of Structural Vibrations with Piezoelectric Materials and Passive Electrical Networks, Journal of Sound and Vibration 146 (2), 243 (1991) beschriebenen Verfahren.

### Bezugszeichen

- 1: interne Störquellen
- 2: aktives Element
- 3: aktives Element
- 4: Übertragungswege
- 5: empfindliche Elemente
- 10: Basisanschlusselement
- 12: Vorspanneinrichtung
- 14: Abstützelement
- 16: Piezo-Aktuator des ersten Aktuator-Systems zwischen Basisanschlusselement 10 und Lastanschlusselement 28
- 18: Piezo-Aktuator des ersten Aktuator-Systems zwischen Basisanschlusselement 10 und Lastanschlusselement 28
- 20: Angriffspunkt des Aktuators 16 auf dem Basisanschlusselement 10
- 22: Angriffspunkt des Aktuators 18 auf dem Basisanschlusselement 10
- 24: Angriffspunkt des Aktuators 16 auf dem Lastanschlusselement 28
- 26: Angriffspunkt des Aktuators 18 auf dem Lastanschlusselement 28
- 28: Lastanschlusselement
- 30: Piezoaktuator des zweiten Aktuator-Systems zwischen Abstützelement 15 und Lastanschlusselement 28
- 32: Piezoaktuator des zweiten Aktuator-Systems zwischen Abstützelement 15 und Lastanschlusselement 28
- 34: Angriffspunkt des Piezoaktuators 30 auf dem Abstützelement 14
- 36: Angriffspunkt des Piezoaktuators 32 auf dem Abstützelement 14
- 38: Angriffspunkt des Piezoaktuators 30 auf dem Lastelement 28
- 40: Angriffspunkt des Piezoaktuators 32 auf dem Lastelement 28
- 42: Symmetrieachse
- 60: Beschleunigungssensor
- 62: Phasenschieber
- 64: Regelungselektronik
- 66: erster Nachverstärker
- 68: 180°-Phasenschieber
- 70: zweiter Nachverstärker
- 80: erstes Aktuator-Paar
- 82: zweites Aktuator-Paar
- 84: drittes Aktuator-Paar
- 88: Kippachse
- 90: Kippachse
- 92: Kippachse
- 100: Piezo-Aktuator
- 102: Angriffspunkt des Piezo-Aktuators 100 auf dem Basisanschlusselement
- 104: Angriffspunkt des Piezo-Aktuators 100 auf dem Lastanschlusselement
- 106: Piezo-Aktuator
- 108: Angriffspunkt des Piezo-Aktuators 106 auf dem Lastanschlusselement
- 110: Angriffspunkt des Piezo-Aktuators 106 auf dem Abstützelement
- 130: Piezo-Aktuator
- 132: Angriffspunkt des Piezo-Aktuators 130 auf dem Basisanschlusselement
- 134: Angriffspunkt des Piezo-Aktuators 130 auf dem Lastanschlusselement
- 136: Piezo-Aktuator
- 138: Angriffspunkt des Piezo-Aktuators 136 auf dem Lastanschlusselement
- 140: Angriffspunkt des Piezo-Aktuators 136 auf dem Abstützelement
- 142: Öffnung im Basisanschlusselement für elektrische Zuführungen zu den Piezo-Aktuatoren
- 160: Piezo-Aktuator
- 162: Piezo-Aktuator
- 164: Angriffspunkt des Piezo-Aktuators 160 auf dem Basisanschlusselement
- 166: Angriffspunkt des Piezo-Aktuators 162 auf dem Basisanschlusselement
- 168: Angriffspunkt des Piezo-Aktuators 160 auf dem Lastanschlusselement
- 170: Angriffspunkt des Piezo-Aktuators 162 auf dem Lastanschlusselement
- 172: Piezo-Aktuator
- 174: Piezo-Aktuator
- 176: Angriffspunkt des Piezo-Aktuators 172 auf dem Abstützelement 180.
- 178: Angriffspunkt des Piezo-Aktuators 174 auf dem Abstützelement 180
- 180: Abstützelement
- 182: Angriffspunkt des Piezo-Aktuators 172 auf dem Lastanschlusselement
- 184: Angriffspunkt des Piezo-Aktuators 174 auf dem Lastanschlusselement
- 190: Piezo-Aktuator
- 192: Piezo-Aktuator
- 194: Angriffspunkt des Piezo-Aktuators 190 auf dem Basisanschlusselement
- 196: Angriffspunkt des Piezo-Aktuators 192 auf dem Basisanschlusselement
- 198: Angriffspunkt des Piezo-Aktuators 190 auf dem Lastanschlusselement
- 200: Angriffspunkt des Piezo-Aktuators 192 auf dem Lastanschlusselement
- 202: Piezo-Aktuator
- 204: Piezo-Aktuator
- 206: Angriffspunkt des Piezo-Aktuators 202 auf dem Abstützelement 210
- 208: Angriffspunkt des Piezo-Aktuators 204 auf dem Abstützelement 210
- 210: Abstützelement
- 212: Angriffspunkt des Piezo-Aktuators 202 auf dem Lastanschlusselement 28
- 214: Angriffspunkt des Piezo-Aktuators 204 auf dem Lastanschlusselement 28
- 216: Vorspanneinrichtung
- 218: Vorspanneinrichtung
- 230: Piezo-Aktuator
- 232: Angriffspunkt des Piezo-Aktuators 230 auf dem Basisanschlusselement 10
- 234: Angriffspunkt des Piezo-Aktuators 230 auf dem Lastanschlusselement 28
- 236: Piezo-Aktuator
- 238: Angriffspunkts des Piezo-Aktuators 236 auf dem Abstützelement 180
- 240: Angriffspunkt des Piezo-Aktuators 236 auf dem Lastanschlusselement 28
- 242: Piezo-Aktuator
- 244: Angriffspunkt des Piezo-Aktuators 242 auf dem Abstützelement 210
- 246: Angriffspunkt des Piezo-Aktuators 242 auf dem Lastanschlusselement 28
- 260: variable Spannungsquelle
- 262: Schalter
- 264: erste Elektrode des Piezokeramik-Elements 268
- 266: zweite Elektrode des Piezokeramik-Elements 268
- 268: Piezokeramik-Element
- 270: Messgerät
- 280: zusammengefasste Einheit aus Piezokeramikelementen des - Piezo-Aktuators 16
- 282: dem Basisanschlusselement 10 naheliegender Anschluss der Einheit 280
- 284: dem Lastanschlusselement 28 naheliegender Anschluss der Einheit 280
- 286: ohmscher Widerstand
- 288: Induktivität

### Liste der zitierten Literatur:

US 5,660,255

DE 195 27 514 C2

N.W. Hagood and A. von Flotow: Damping of Structural Vibrations with Piezoelectric Materials and Passive Electrical Networks, Journal of Sound and Vibration 146 (2), 243 (1991).

D. Mayer, Ch. Linz, and V. Krajenski: Synthetische Induktivitäten für die semi-passive Dämpfung, 5. Magdeburger Maschinenbautage, 2001.

## Patentansprüche

1. Schnittstelle zur Reduktion mechanischer Schwingungen, welche ein Basisanschlusselement (10), ein Lastanschlusselement (28) und mindestens ein Abstützelement (14; 180, 210) aufweist,
a) wobei sich zwischen mindestens einem auf dem Basisanschlusselement (10) liegenden Angriffspunkt (20, 22; 102; 132; 164, 166, 194, 196; 232) und mindestens einem auf dem Lastanschlusselement (28) liegenden Angriffspunkt (24, 26; 104; 134; 168, 170, 198, 200) mindestens ein erstes als Aktuator-System ausgebildetes Energiewandler-System (16, 18; 100; 130; 160, 162, 190, 192; 230) erstreckt;
b) wobei sich zwischen mindestens einem auf dem Abstützelement (14; 180, 210) liegenden Angriffspunkt (34, 36; 110; 140; 176, 178, 206, 208) und mindestens einem auf dem Lastanschlusselement (28) liegenden Angriffspunkt (38, 40; 108; 138; 182, 184, 212, 214) mindestens ein zweites als Aktuator-System ausgebildetes Energiewandler-System (30, 32; 106; 136; 172, 174, 202, 204) erstreckt;
c) wobei das Basisanschlusselement (10) mit dem mindestens einen Abstützelement (14; 180, 210) über mindestens eine elastische Vorspanneinrichtung (12; 216, 218) derart verbunden ist, dass durch die mindestens eine elastische Vorspanneinrichtung eine Vorlast auf das erste (16, 18; 100; 130; 160, 162, 190, 192; 230) und das zweite (30, 32; 106; 136; 172, 174, 202, 204) Energiewandler-System ausgeübt wird;
c2) wobei das Basisanschlusselement (10) und das mindestens eine Abstützelement (14; 180, 210) einander nicht berühren;
d) wobei die Energiewandler-Systeme (16, 18; 100; 130; 160, 162, 190, 192; 230; 30, 32; 106; 136; 172, 174, 202, 204) in ihren jeweiligen Angriffpunkten kugelartig punktförmig gelagert sind; und
e) wobei die mindestens eine elastische Vorspanneinrichtung (12; 216, 218) derart ausgebildet ist, dass eine definierte Einstellung der Vorlast auf die Energiewandler-Systeme (16, 18; 100; 130; 160, 162, 190, 192; 230; 30, 32; 106; 136; 172, 174, 202, 204) möglich ist.

2. Schnittstelle nach dem vorhergehenden Anspruch,
**dadurch gekennzeichnet,**
**dass** die Energiewandler-Systeme (16, 18, 30, 32; 100, 106; 130, 136; 160, 162, 190, 192, 172, 174, 202, 204; 230, 238, 242) mindestens eins der folgenden Elemente aufweisen:
- einen Piezo-Aktuator,
- einen Formgedächtnislegierungs-Aktuator,
- einen elektro- oder magnetorheologischen Flüssigkeits-Aktuator oder Flüssigkeitsdämpfer, oder
- einen elektro- oder magnetostriktiven Aktuator.

3. Schnittstelle nach einem der vorhergehenden Ansprüche,
**dadurch gekennzeichnet,**
**dass** das Basisanschlusselement (10) und das Lastanschlusselement (28) standardisierte Anschlussgeometrien aufweisen.

4. Schnittstelle nach einem der vorhergehenden Ansprüche,
**dadurch gekennzeichnet,**
**dass** mindestens ein Sensorsystem (60) zur Bestimmung von Weg und/oder Geschwindigkeit und/oder Beschleunigung und/oder Kraft mit dem Lastanschlusselement (28) verbunden ist.

5. Schnittstelle nach einem der vorhergehenden Ansprüche,
**dadurch gekennzeichnet,**
**dass** mindestens ein Aktuator-System oder ein Teil mindestens eines Aktuator-Systems gleichzeitig als Energiewandler genutzt werden kann, der mechanische Energie in elektrische Energie umwandeln kann.

6. Anordnung zur Reduktion mechanischer Schwingungen,
**gekennzeichnet durch**,
- eine Schnittstelle nach einem der vorhergehenden Ansprüche,
- mindestens ein als Bewegungs- und/oder Beschleunigungs- und/oder Geschwindigkeits- und/oder Kraftsensor wirkendes System, und
- eine elektronische Schaltung, welche aus einem Signal des als Bewegungs- und/oder Beschleunigungs- und/oder Geschwindigkeits- und/oder Kraftsensor wirkenden Systems eine Zielfunktion zur Ansteuerung der Energiewandler-Systeme der Schnittstelle generiert.

7. Anordnung zur Reduktion mechanischer Schwingungen,
**gekennzeichnet durch**,
- eine Schnittstelle nach einem der vorhergehenden, auf eine Schnittstelle gerichteten Ansprüche, und
- eine elektronische Schaltung zur passiven oder semi-aktiven Schwingungsreduktion.

8. Anordnung zur Reduktion mechanischer Schwingungen,
**dadurch gekennzeichnet,**
**dass** mehrere Schnittstellen nach einem der vorhergehenden, auf eine Schnittstelle gerichteten Ansprüche in Kaskaden derart hintereinandergeschaltet sind, dass jeweils das Basisanschlusselement (10) der folgenden Schnittstelle mit dem Lastanschlusselement (28) der vorhergehenden Schnittstelle verbunden ist.

## Claims

1. An interface for reducing mechanical vibrations, which has a base connection element (10), a load connection element (28) and at least one support element (14; 180, 210),
a) wherein at least a first energy converter system (16, 18; 100; 130; 160, 162, 190, 192; 230) which is embodied as an actuator system extends between at least one engagement point (20, 22; 102; 132; 164, 166, 194, 196; 232) located on the base connection element (10) and at least one engagement point (24, 26; 104; 134; 168, 170, 198, 200) located on the load connection element (28);
b) wherein at least one second energy converter system (30, 32; 106; 136; 172, 174, 202, 204) which is embodied as an actuator system extends between at least one engagement point (34, 36; 110; 140; 176, 178, 206, 208) located on the support element (14; 180, 210) and at least one engagement point (38, 40; 108; 138; 182, 184, 212, 214) located on the load connection element (28):
c) wherein the base connection element (10) is connected to the at least one support element (14; 180, 210) by means of at least one elastic pretensioning device (12; 216, 218) in such a way that the at least one elastic pretensioning device exerts a preload on the first energy converter system (16, 18; 100; 130; 160, 162, 190, 192; 230) and on the second energy converter system (30, 32; 106; 136; 172, 174, 202, 204);
c2) wherein the base connection element (10) and the at least one support element (14; 180, 210) do not touch one another;
d) wherein the engagement points of the energy converter systems (16, 18; 100; 130; 160, 162, 190, 192; 230; 30, 32; 106; 136; 172, 174, 202, 204) establish spherically punctiform points of contact; and
e) wherein the at least one elastic pretensioning device (12; 216, 218) is embodied in such a way that a defined adjustment of the preload exerted on the energy converter systems (16, 18; 100; 130; 160, 162, 190, 192; 230; 30, 32; 106; 136; 172, 174, 202, 204) is possible.

2. The interface as claimed in the preceding claim,
**characterized in**
**that** the energy converter systems (16, 18, 30, 32; 100, 106; 130, 136; 160, 162, 190, 192, 172, 174, 202, 204; 230, 238, 242) have at least one of the following elements:
- a piezoactuator,
- a shape memory alloy actuator,
- an electrorheological or magnetorheological fluid actuator or fluid damper, or
- an electrostrictive or magnetostrictive actuator.

3. The interface as claimed in one of the preceding claims,
**characterized in**
**that** the base connection element (10) and the load connection element (28) have standardized connection geometries.

4. The interface as claimed in one of the preceding claims,
**characterized in**
**that** at least one sensor system (60) for determining travel and/or velocity and/or acceleration and/or force is connected to the load connection element (28).

5. The interface as claimed in one of the preceding claims,
**characterized in**
**that** at least one actuator system or a part of at least one actuator system can simultaneously be used as an energy converter which can convert mechanical energy into electrical energy.

6. An arrangement for reducing mechanical vibrations,
**characterized by**
- an interface as claimed in one of the preceding claims,
- at least one system which acts as a movement sensor and/or acceleration sensor and/or velocity sensor and/or force sensor, and
- an electronic circuit which generates, from a signal of the system which acts as a movement sensor and/or acceleration sensor and/or velocity sensor and/or force sensor, a target function for actuating the energy converter systems of the interface.

7. An arrangement for reducing mechanical vibrations,
**characterized by**
- an interface as claimed in one of the preceding claims directed to an interface, and
- an electronic circuit for passive or semi-active vibration reduction.

8. An arrangement for reducing mechanical vibrations,
**characterized in**
**that** a plurality of interfaces as claimed in one of the preceding claims directed to an interface are connected in series in cascades in such a way that in each case the base connection element (10) of the following interface is connected to the load connection element (28) of the preceding interface.

## Revendications

1. Liaison permettant de réduire les vibrations mécaniques, laquelle comporte un élément de raccordement de base (10), un élément de raccordement de charge (28) et au moins un élément d'appui (14 ; 180, 210),
a) dans laquelle au moins un premier système convertisseur d'énergie (16, 18 ; 100 ; 130 ; 160, 162, 190, 192 ; 230), réalisé sous la forme d'un système actionneur, s'étend entre au moins un point d'application (20, 22 ; 102 ; 132 ; 164, 166, 194, 196 ; 232), situé sur l'élément de raccordement de base (10), et au moins un point d'application (24, 26 ; 104 ; 134 ; 168, 170, 198, 200) situé sur l'élément de raccordement de charge (28) ;
b) dans laquelle au moins un deuxième système convertisseur d'énergie (30, 32 ; 106 ; 136 ; 172, 174, 202, 204), réalisé sous la forme d'un système actionneur, s'étend entre au moins un point d'application (34, 36 ; 110 ; 140 ; 176, 178, 206, 208), situé sur l'élément d'appui (14 ; 180, 210), et au moins un point d'application (38, 40 ; 108 ; 138 ; 182, 184, 212, 214) situé sur l'élément de raccordement de charge (28) ;
c) dans laquelle l'élément de raccordement de base (10) est relié audit au moins un élément d'appui (14 ; 180, 210) par l'intermédiaire d'au moins un dispositif de précontrainte (12 ; 216, 218) élastique, de telle sorte qu'une précontrainte est appliquée par ledit au moins un dispositif de précontrainte élastique sur le premier (16, 18 ; 100 ; 130 ; 160, 162, 190, 192 ; 230) et le deuxième (30, 32 ; 106 ; 136 ; 172, 174, 202, 204) système convertisseur d'énergie ;
c2) l'élément de raccordement de base (10) et ledit au moins un élément d'appui (14 ; 180, 210) ne venant pas en contact l'un avec l'autre ;
d) dans laquelle les systèmes convertisseurs d'énergie (16, 18 ; 100 ; 130 ; 160, 162, 190, 192 ; 230 ; 30, 32 ; 106 ; 136 ; 172, 174, 202, 204) sont logés ponctuellement à la manière d'une sphère dans leurs points d'application respectifs ; et
e) dans laquelle ledit au moins un dispositif de précontrainte (12 ; 216, 218) élastique est réalisé de telle sorte qu'il est possible d'effectuer un réglage défini de la précontrainte exercée sur les systèmes convertisseurs d'énergie (16, 18 ; 100 ; 130 ; 160, 162, 190, 192 ; 230 ; 30,32 ; 106 ; 136 ; 172, 174, 202, 204).

2. Liaison selon la revendication précédente, **caractérisée en ce que** les systèmes convertisseurs d'énergie (16, 18, 30, 32 ; 100, 106 ; 130, 136 ; 160,162, 190, 192, 172, 174, 202, 204; 230, 238, 242) comportent au moins un des éléments suivants :
- un actionneur piézoélectrique,
- un actionneur en alliage à mémoire de forme,
- un actionneur de liquide électrique ou magnétorhéologique ou un amortisseur de liquide, ou
- un actionneur électrique ou magnétostrictif.

3. Liaison selon l'une quelconque des revendications précédentes, **caractérisée en ce que** l'élément de raccordement de base (10) et l'élément de raccordement de charge (28) comportent des géométries de raccordement standardisées.

4. Liaison selon l'une quelconque des revendications précédentes, **caractérisée en ce qu'**au moins un système de détection (60) destiné à déterminer le déplacement et/ou la vitesse et/ou l'accélération et/ou la force est relié à l'élément de raccordement de charge (28).

5. Liaison selon l'une quelconque des revendications précédentes, **caractérisée en ce qu'**au moins un système actionneur ou une partie d'au moins un système actionneur peut être utilisé comme convertisseur d'énergie apte à convertir l'énergie mécanique en énergie électrique.

6. Installation permettant de réduire les vibrations mécaniques, **caractérisée par**
- une liaison selon l'une quelconque des revendications précédentes,
- au moins un système agissant comme un capteur de déplacement et/ou capteur d'accélération et/ou capteur de vitesse et/ou capteur de force, et
- un circuit électronique qui, à partir d'un signal du système agissant comme un capteur de déplacement et/ou capteur d'accélération et/ou capteur de vitesse et/ou capteur de force, génère une fonction cible destinée à activer les systèmes convertisseurs d'énergie.

7. Installation permettant de réduire les vibrations mécaniques, **caractérisée par**
- une liaison selon l'une quelconque des revendications précédentes relatives à une liaison, et
- un circuit électronique destiné à réduire les vibrations de manière passive ou semi-active.

8. Installation permettant de réduire les vibrations mécaniques, **caractérisée en ce que** plusieurs liaisons selon l'une quelconque des revendications précédentes relatives à une liaison, sont montées en cascade les unes derrière les autres, de telle sorte que respectivement l'élément de raccordement de base (10) de la liaison suivante est relié à l'élément de raccordement de charge (28) de la liaison précédente.
